# EUROPÄISCHE PATENTSCHRIFT

(11) **EP 2 495 481 B1**
(45) Veröffentlichungstag und Bekanntmachung des Hinweises auf die Patenterteilung: **27.05.2020**
(21) Anmeldenummer: 12000833.9
(22) Anmeldetag: 09.02.2012
(51) Int. Cl.: F16K 31/00, F16K 31/02, F16K 31/04, F16K 37/00

(54) **Anordnung zur Einstellung eines Ventils**
Valve adjusting system
Agencement destiné au réglage d'une soupape

(30) Priorität: 03.03.2011 DE 102011012908
(43) Veröffentlichungstag der Anmeldung: 05.09.2012
(73) Patentinhaber: Möhlenhoff GmbH, 38229 Salzgitter (DE)
(72) Erfinder: Seelmann, Christian, 31174 Schellerten (DE); Floren, Christian, 31162 Bad Salzdetfurth (DE)
(74) Vertreter: Döring, Roger

(56) Entgegenhaltungen:
- EP-A2- 2 025 983
- WO-A2-2004/072475
- DE-A1- 1 600 713
- US-A- 5 433 245
- US-A1- 2009 222 220

## Beschreibung

Die Erfindung bezieht sich auf eine Anordnung zur Einstellung eines Ventils, die mittels eines Adapters auf das Ventil aufsetzbar ist, sowie auf ein zugehöriges Ventil.

Eine solche Anordnung geht beispielsweise aus der DE 1 600 713 A1 oder der DE 199 10 750 A1 hervor. Ventile, bei denen die Anordnung nach der Erfindung einsetzbar ist, werden beispielsweise in der Heizungs- und Lüftungstechnik verwendet. Sie können grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Menge eines durch ein entsprechendes Rohrsystem strömenden bzw. fließenden Mediums verändert werden kann. Ein solches Medium ist beispielsweise Wasser oder Luft.

In heute bekannter Technik wird der Stößel eines Ventils vorzugsweise durch Stellelemente bewegt, die mittels elektrischen Stroms aktiviert werden. Ein entsprechendes Stellelement ist beispielsweise mit einem einen Arbeitskolben aufweisenden, temperaturabhängigen Dehnkörper ausgerüstet, an dem ein elektrischer Widerstand als Heizelement angebracht ist. Ein beispielsweise von einem Thermostat geliefertes Signal bewirkt, daß der Widerstand mit Strom versorgt wird. Durch die dann erzeugte Wärme wird der Arbeitskolben des Dehnkörpers verstellt. Der Stößel eines in Ruhestellung beispielsweise geschlossenen Ventils wird dadurch entlastet und durch seine Ventilfeder in Richtung "Öffnung des Ventils" bewegt. Eine solche Anordnung geht beispielsweise aus der DE 31 40 472 C2 hervor. Als Stellelement kann aber beispielsweise auch ein Elektromotor eingesetzt werden.

In der DE 1 600 713 A ist ein Zonenventil mit Verstelleinrichtung beschrieben, das für unterschiedliche Zonen eines Gebäudes eingesetzt werden soll. Es kann mittels einer Überwurfmutter mit einer jeweils zu beeinflussenden Rohrleitung verbunden werden. Das Zonenventil hat ein mit einem Arbeitskolben ausgerüstetes Arbeitselement. Nach Erwärmung des Arbeitselements durch eine Heizspule tritt der Arbeitskolben aus seinem Gehäuse aus. Das Arbeitselement wird dadurch angehoben. Gleichzeitig wird über eine Halteplatte ein mit einem beweglichen Bügel verbundener Kolben angehoben. Die Stromzufuhr zur Heizspule kann durch einen Hubbegrenzungsschalter unterbrochen werden, der mit einem Betätigungsstift ausgerüstet ist. Der Betätigungsstift kann durch die Bewegung des beweglichen Bügels betätigt werden.

Der maximal mögliche Hub des Arbeitskolbens bekannter temperaturabhängiger Dehnkörper bzw. Stellelemente ist größer als der Weg, den der Stößel eines Ventils zwischen seiner Schließstellung einerseits und seiner Offenstellung andererseits zurücklegt. Durch die DE 199 10 750 A1 ist eine Anordnung bekannt, durch welche die Bewegung des Arbeitskolbens eines mittels eines elektrischen Heizelements zu erwärmenden Dehnkörpers auf einen maximalen Hub begrenzt wird. An den Dehnkörper dieser Anordnung ist eine mit einem Mikroprozessor in Verbindung stehende Meßeinrichtung angeschlossen, die von der Position des Arbeitskolbens des Dehnkörpers abhängige elektrische Spannungswerte an den Mikroprozessor liefert. Aus diesen Spannungswerten wird vom Mikroprozessor eine zwischen einer der Schließstellung des Ventils entsprechenden minimalen Spannung und einer einem vorgegebenen, maximalen Hub des Stößels entsprechenden maximalen Spannung liegende Regelstrecke gebildet und gespeichert. Um ein vollständiges Öffnen des Ventils mit Sicherheit zu erreichen, wird der maximale Hub des Arbeitskolbens des Dehnkörpers größer gewählt als der für den Stößel des Ventils benötigte maximale Hub desselben. Das hat zur Folge, daß der Stellweg der über die elektrische Spannung eingestellt wird, immer noch größer ist, als der Weg, den der Stößel des Ventils zwischen dessen Offenstellung und dessen Schließstellung zurücklegt. Der Dehnkörper wird bis zum Erreichen des maximalen Hubs des Arbeitskolbens mit entsprechendem Energieaufwand erwärmt.

Der Erfindung liegt die Aufgabe zugrunde, die eingangs geschilderte Anordnung so zu gestalten, daß der Weg des Stößels des Ventils genauer erfaßt werden kann.

Diese Aufgabe wird entsprechend den Merkmalen des Patentanspruchs 1 gelöst. Bei dieser Anordnung wird mittels des Zwischenstücks nur der Weg des Stößels des Ventils als maximale Wegstrecke erfaßt, den derselbe als maximaler Hub zwischen der Offenstellung und der Schließstellung des Ventils zurücklegt. Der Energieaufwand zum Betreiben der Anordnung ist gegenüber bekannten Anordnungen entsprechend reduziert. Von wesentlichem Vorteil der Anordnung ist auch, dass der Weg des Stößels des Ventils mittels der Sensorik der Steuereinheit sehr genau erfaßt und als maximale Strecke in der Steuereinheit registriert wird. Für die Sensorik, die auch und insbesondere zur Einstellung des Stößels des Ventils in Zwischenstellungen dient, steht damit eine gegenüber der bisherigen Arbeitsweise größere, nur den Stößel betreffende Auflösung zur Verfügung, die eine genauere Einstellung der gewünschten Position des Stößels ermöglicht. Zwischenstellungen des Stößels des Ventils werden beispielsweise eingestellt, wenn der lichte Querschnitt eines Rohres bzw. einer Rohrleitung mittels des Ventils oder einer von demselben betätigten Klappe gegenüber einem maximalen Querschnitt verkleinert werden soll. Erreicht werden die aufgeführten Vorteile durch das mechanisch stabile Zwischenstück, das ständig am Stößel anliegt, gegen dessen Stirnseite es unter der Wirkung einer Feder gedrückt wird. Die Erwärmung des Stellelements kann bei dieser Anordnung spätestens dann abgebrochen bzw. unterbrochen werden, wenn der Stößel des Ventils seinen maximalen Hub zurückgelegt hat. Das wirkt sich auch auf den Arbeitskolben des Stellelements aus, der dann ebenfalls nicht mehr bewegt wird.

Der Aufbau der Sensorik der Steuereinheit ist bei dieser Anordnung beliebig, solange der Weg des Zwischenstücks einwandfrei erfaßt wird. Eine solche Sensorik kann beispielsweise einen Mikroprozessor aufweisen, an den eine mit einem Stellglied gekoppelte Meßeinrichtung angeschlossen ist, die von der Position des Stellgliedes abhängige elektrische Spannungswerte an den Mikroprozessor liefert. Aus den Spannungswerten wird vom Mikroprozessor eine zwischen einer der Schließstellung des Ventils entsprechenden minimalen Spannung und einer einem vorgegebenen, maximalen Hub des Stößels entsprechenden maximalen Spannung liegende Regelstrecke gebildet und gespeichert. Die zwischen 0 und 100 % einstellbaren Spannungswerte werden durch den Mikroprozessor den Spannungswerten der in demselben gespeicherten Regelstrecke proportional zugeordnet. Wenn beispielsweise das Ventil voll geöffnet sein soll, damit die maximal mögliche Durchflußmenge eines Mediums fließen kann, dann wird dem Mikroprozessor die maximale Steuerspannung zugeführt, welche der maximalen Spannung der Regelstrecke entspricht. Soll nur die Hälfte der maximal möglichen Durchflußmenge fließen, dann beträgt die Steuerspannung nur 50 % ihres Maximalwerts. Das gilt analog für jeden anderen prozentualen Wert von Steuerspannung und Durchflußmenge. Für die Sensorik sind zur Erfassung des Weges des Zwischenstücks bzw. des Stößels des Ventils beispielsweise induktiv oder kapazitiv arbeitende Steuereinheiten einsetzbar. Es können auch Fotostrecken oder mittels Magneten arbeitende Steuereinheiten verwendet werden, ebenso wie eine Einrichtung mit einem CCD-Array (Charged Coppled Device), wie sie in der EP 1 837 728 B1 beschrieben ist.

Ein Ausführungsbeispiel des Erfindungsgegenstandes ist in den Zeichnungen dargestellt.

Es zeigen:
Fig. 1 in schematischer Darstellung eine an einem Ventil befestigte Anordnung nach der Erfindung.
Fig. 2 und Fig. 3 eine Anordnung nach der Erfindung in zwei unterschiedlichen Positionen.

Das Stellelement kann als temperaturabhängiges Bauteil beispielsweise aus einer Formgedächtnislegierung bestehen, wie es beispielsweise aus der WO 2007/036285 A1 hervorgeht. Ein solches Bauteil kann zu seiner Erwärmung direkt an eine Stromquelle angeschlossen werden. Es kann an demselben aber auch ein elektrisches Heizelement angebracht sein. Als temperaturabhängiges Bauteil kann für das Stellelement auch ein mit einem speziellen Material gefüllter, mit einem Arbeitskolben ausgerüsteter Dehnkörper eingesetzt werden, wie er beispielsweise aus der DE 31 40 472 C1 hervorgeht. Das Stellelement kann auch ein Elektromotor sein. In der folgenden Beschreibung wird als Stellelement ein temperaturabhängiger Dehnkörper berücksichtigt, stellvertretend auch für alle anderen möglichen Ausführungsformen des Stellelements.

Das Ventil kann dann, wenn es nicht erwärmt wird, geschlossen oder voll geöffnet sein. Das hängt von dem jeweils unterschiedlichen Aufbau der für seine Betätigung verwendeten Anordnung ab. Die beiden Versionen werden als "stromlos geschlossen" und "stromlos offen" bezeichnet. Sie werden in der folgenden Beschreibung erläutert.

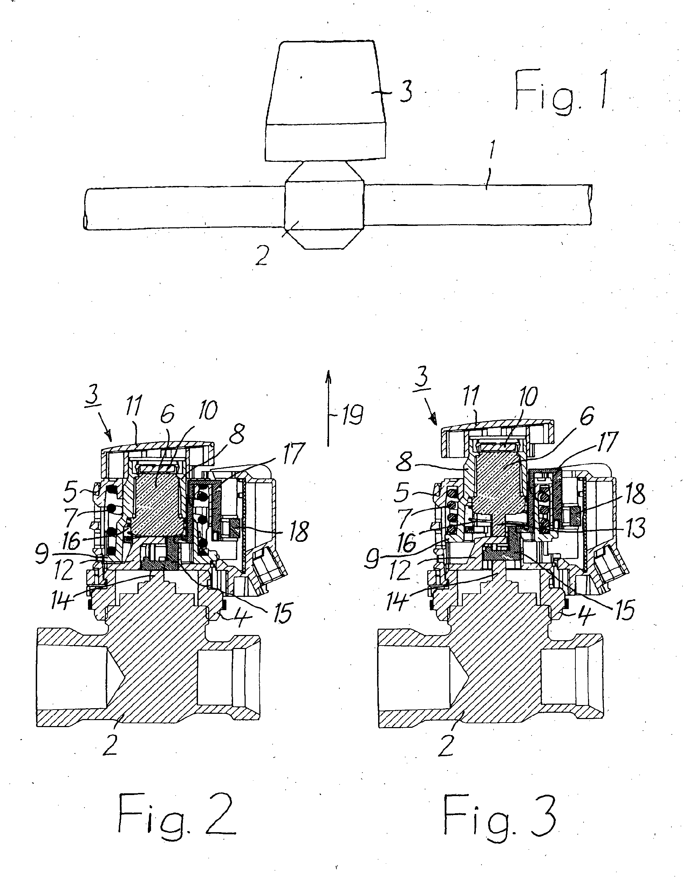

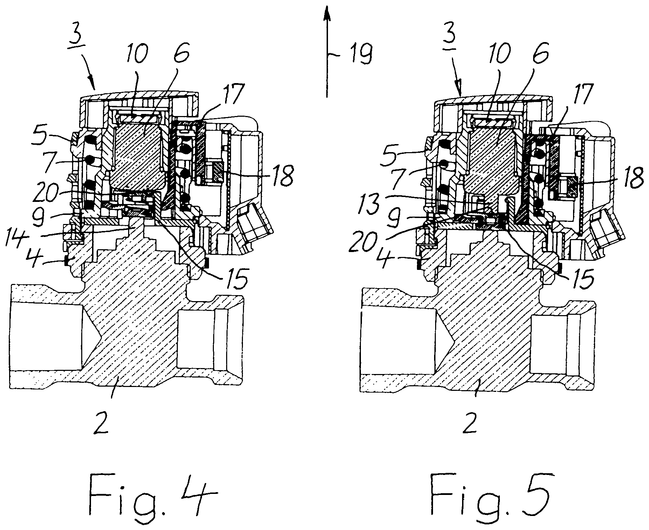

Gemäß Fig. 1 ist in einer Rohrleitung 1, in der beispielsweise Heizungswasser geführt wird, ein Ventil 2 angeordnet. An dem Ventil 2 ist eine Anordnung 3 angebracht, mit welcher die Stellung des Ventils 2 temperaturabhängig gesteuert werden kann. Die Anordnung 3 geht aus den Fig. 2 bis 5 in zwei unterschiedlichen Ausführungsformen hervor. Dabei zeigen jeweils im Schnitt die Fig. 2 und 3 die Anordnung bei stromlos geschlossenem Ventil und die Fig. 4 und 5 die Anordnung bei stromlos offenem Ventil. In den Fig. 2 bis 5 sind die Rohrleitung 1, das Ventil 2 und der Dehnkörper nur schraffiert, ohne genauere Darstellung eingezeichnet, weil diese Bauteile allgemein bekannt sind.

Auf das beispielsweise mit einem Außengewinde versehene Ventil 2 ist gemäß Fig. 2 ein Adapter 4 aufgeschraubt, der zur Befestigung und Halterung der Anordnung 3 dient, beispielsweise durch den Einsatz von einrastenden Befestigungselementen. Die Anordnung 3 weist einen gehäuseartigen Halter 5 auf, in dem ein Dehnkörper 6 und eine Druckfeder 7 angebracht sind. Der Dehnkörper 6 ist von einer käfigartigen Haube 8 umgeben, die an einem Ende einen radial nach außen abstehenden Flansch 9 aufweist, an dem die Druckfeder 7 mit einem Ende anliegt. Das andere Ende der Druckfeder 7 ist am Halter 5 abgestützt. Am Dehnkörper 6 ist ein elektrisches Heizelement 10 angeordnet, mit Vorteil ein PTC-Widerstand. Über dem Heizelement 10 liegt eine abdeckende Kappe 11. Zum Halter 5 gehört auch eine mechanisch stabile Brücke 12, auf welcher der Dehnkörper 6 bzw. dessen aus Fig. 3 ersichtlicher Arbeitskolben 13 abgestützt ist.

Zwischen dem Stößel 14 des Ventils 2 und dem Dehnkörper 6 ist ein Zwischenstück 15 angeordnet, das aus einem mechanisch stabilen Material besteht, beispielsweise aus Polyamid. Das Zwischenstück 15 ist am bzw. im Halter 5 so geführt, dass es verkantungsfrei in Richtung der Achse des Stößels 14 in demselben bewegt werden kann. Es liegt entsprechend der zeichnerischen Darstellung an der Stirnfläche des Stößels 14 an und wird durch eine Feder 16 ständig gegen dieselbe gedrückt, welche gemäß den Fig. 2 und 3 an der Haube 8 abgestützt ist. Das Zwischenstück 15 ist mit einem in Richtung der Achse des Stößels 14 verlaufenden, U-förmig gebogenen Bügel 17 ausgerüstet, an dem ein Teil einer zweiteiligen Sensorik angebracht ist. Der zweite Teil 18 der Sensorik ist ortsfest mit dem Halter 5 verbunden.

Die Anordnung nach den Fig. 2 und 3 arbeitet beispielsweise wie folgt:
Das Ventil 2 ist in der in Fig. 2 gezeichneten Position geschlossen. Wenn das Heizelement 10 an eine Stromquelle angeschlossen wird, wird dasselbe erwärmt. Dadurch wird der Dehnkörper 6 erwärmt, so dass sein Arbeitskolben 13 aus demselben herausgedrückt wird. Da derselbe an der ortsfesten Brücke 12 abgestützt ist, wird der Dehnkörper 6 durch den Arbeitskolben 13 in Richtung des Pfeiles 19 bewegt. Dabei wird die Druckfeder 7 zusammengedrückt. Gleichzeitig wird der Stößel 14 des Ventils 2 entlastet. Er wird unter der Wirkung seiner Ventilfeder ebenfalls in Richtung des Pfeiles 19 in Richtung seiner Offenstellung bewegt, die aus Fig. 3 hervorgeht.

Während der geschilderten Bewegung des Stößels 14 wird das Zwischenstück 15 durch die Feder 16 ständig an die Stirnfläche desselben gedrückt. Das Zwischenstück 14 macht also die Bewegung des Stößels 14 ohne Unterbrechung mit. Das gilt auch für seinen Bügel 17 mit dem einen Teil der Sensorik, der dabei relativ zu dem anderen, ortsfesten Teil 18 derselben bewegt wird. Wenn der Stößel 14 seinen maximalen, vorgegebenen Hub ausgeführt hat, welcher bekannt und in der Sensorik gespeichert ist, ist das Ventil 2 entsprechend Fig. 3 voll geöffnet. Die Stromzufuhr an das Heizelement 10 wird dann unterbrochen.

Wenn das Ventil 2 in seiner Offenstellung gehalten werden soll, dann wird die Stromzufuhr für das Heizelement 10 dauernd ein- und ausgeschaltet, weil der Dehnkörper 6 bei kälter werdendem Heizelement 10 ebenfalls kälter wird und dann wegen einer reduzierten, auf den Arbeitskolben 13 wirkenden Kraft durch die Druckfeder 7 entgegen der Richtung des Pfeiles 19 bewegt wird. Dieses dauernde Ein- und Ausschalten des Heizelements 10 gilt auch für jede gewünschte Zwischenstellung des Stößels 14. Wenn das Ventil 2 wieder vollständig geschlossen werden soll, wird das Heizelement 10 ganz abgeschaltet. Der Stößel 14 des Ventils 2 geht dann unter der Wirkung der Druckfeder 7 in seine aus Fig. 2 ersichtliche Schließposition zurück.

## Patentansprüche

1. Anordnung (3) zur Einstellung eines Ventils (2) und zugehöriges Ventil (2), das mit einem unter der Wirkung einer Ventilfeder stehenden Stößel (14) ausgerüstet ist, wobei mit der Anordnung der Weg des Stößels (14) erfaßt wird, den derselbe zwischen einer Offenstellung und einer Schließstellung des Ventils (2) zurücklegt, welche einen in Arbeitsposition mit dem Ventil (2) verbundenen Adapter (4) aufweist, der zur Befestigung und Halterung der Anordnung (3) am Ventil (2) dient, welche außerdem mit einem gehäuseartigen Halter (5) ausgerüstet ist, an dem ein Stellelement angeordnet ist, das einen in seiner Achsrichtung verstellbaren Arbeitskolben (13) hat, und welche eine Steuereinheit mit einer Einrichtung zur Erfassung des Weges des Stößels und eine Einrichtung zur Begrenzung des Hubes des Arbeitskolbens (13) des Stellelements aufweist, bei welcher
- das Stellelement von einer käfigartigen Haube (8) umgeben ist, die an einem Ende einen radial nach außen abstehenden Flansch (9) aufweist, an dem eine Druckfeder (7) mit einem Ende anliegt, die mit ihrem anderen Ende am Halter (5) abgestützt ist,
- am bzw. im Halter (5) ein durch denselben geführtes, in Achsrichtung des Arbeitskolbens (13) bewegbares, mechanisch stabiles Zwischenstück (15) angeordnet ist,
- das Zwischenstück (15) in Arbeitsposition bei an dem Ventil (2) befestigten Adapter (4) am Stößel (14) des Ventils (2) anliegt und unter der Wirkung einer Feder (16), welche einerseits am Zwischenstück (15) und andererseits an der Haube (8) anliegt, ständig an die Stirnseite des Stößels (14) gedrückt wird, und
- das Zwischenstück (15) mit einem Teil einer zweiteiligen Sensorik der Steuereinheit ausgerüstet ist, welche den Weg des Zwischenstücks (15) erfaßt, den dasselbe entsprechend der Bewegung des Stößels (14) des Ventils (2) zwischen einer Offenstellung und einer Schließstellung desselben zurücklegt, deren anderer Teil (18) ortsfest am Halter (5) der Anordnung (3) angebracht ist.

2. Anordnung nach Anspruch 1, **dadurch gekennzeichnet, dass** als Stellelement ein temperaturabhängiges, durch Einschalten einer elektrischen Stromquelle zu erwärmendes Bauteil eingesetzt ist.

3. Anordnung nach Anspruch 1, **dadurch gekennzeichnet, dass** als Stellelement ein Elektromotor eingesetzt ist.

## Claims

1. Arrangement (3) for setting a valve (2), and associated valve (2), which valve is equipped with a plunger (14) which is subject to the action of a valve spring, wherein, by way of the arrangement, the displacement of the plunger (14) that said plunger covers between an open position and a closed position of the valve (2) is detected, said arrangement having an adaptor (4), which is connected to the valve (2) in a working position and serves for the fastening and holding of the arrangement (3) on the valve (2), furthermore being equipped with a housing-like holder (5), on which there is arranged a setting element which has a working piston (13) which is adjustable in its axial direction, and having a control unit, which has a device for detecting the displacement of the plunger and has a device for limiting the stroke of the working piston (13) of the setting element, in which arrangement
- the setting element is surrounded by a cage-like hood (8) which, at one end, has a radially outwardly projecting flange (9) against which a compression spring (7) bears with one end, said compression spring being supported with its other end against the holder (5),
- there is arranged on or in the holder (5) a mechanically stable intermediate piece (15) which is guided through said holder and which is movable in an axial direction of the working piston (13),
- the intermediate piece (15), in a working position, with the adaptor (4) fastened on the valve (2), bears against the plunger (14) of the valve (2) and is constantly pressed onto the end side of the plunger (14) under the action of a spring (16), which, at one side, bears against the intermediate piece (15) and, at the other side, bears against the hood (8), and
- the intermediate piece (15) is equipped with part of a two-part sensor arrangement of the control unit, which detects the displacement of the intermediate piece (15) that said intermediate piece covers according to the movement of the plunger (14) of the valve (2) between an open position and a closed position thereof, the other part (18) of said sensor arrangement being attached in a positionally fixed manner to the holder (5) of the arrangement (3).

2. Arrangement according to Claim 1, **characterized in that** a temperature-dependent component which is to be heated by switching on an electrical current source is used as a setting element.

3. Arrangement according to Claim 1, **characterized in that** an electric motor is used as a setting element.

## Revendications

1. Arrangement (3) de réglage d'une soupape (2) et soupape (2) associée, qui est équipée d'un poussoir (14) soumis à l'action d'un ressort de soupape, l'arrangement détectant la course du poussoir (14) que celui-ci parcourt entre une position ouverte et une position fermée de la soupape (2), ledit arrangement possédant un adaptateur (4) relié à la soupape (2) en position de travail, qui sert à fixer et à maintenir l'arrangement (3) sur la soupape (2), ledit arrangement étant également équipé d'un élément de maintien (5) de type boîtier sur lequel est disposé un élément de commande qui comporte un piston de travail (13) positionnable dans sa direction axiale, et ledit arrangement possédant une unité de commande pourvue d'un dispositif destiné à détecter la course du poussoir et un dispositif destiné à limiter la course du piston de travail (13) de l'élément de commande, arrangement avec lequel
- l'élément de commande est entouré par un capot (8) de type cage qui possède à une extrémité une bride (9) faisant saillie dans le sens radial vers l'extérieur, contre laquelle repose un ressort de compression (7) par une extrémité et qui prend appui par son autre extrémité sur l'élément de maintien (5),
- une pièce intermédiaire (15) mécaniquement stable, pouvant se déplacer dans la direction de l'axe du piston de travail (13), est disposée sur ou dans l'élément de maintien (5) en étant guidée par celui-ci,
- en position de travail, avec l'adaptateur (4) fixé à la soupape (2), la pièce intermédiaire (15) repose contre le poussoir (14) de la soupape (2) et elle est constamment poussée contre le côté frontal du poussoir (14) sous l'action d'un ressort (16) qui repose d'un côté contre la pièce intermédiaire (15) et de l'autre côté contre le capot (8), et
- la pièce intermédiaire (15) est équipée d'une partie d'un système de détection en deux parties de l'unité de commande, lequel détecte la course de la pièce intermédiaire (15) que parcourt celle-ci en fonction du mouvement du poussoir (14) de la soupape (2) entre une position ouverte et une position fermée de celle-ci, et dont l'autre partie (18) est montée en position fixe sur l'élément de maintien (5) de l'arrangement (3).

2. Arrangement selon la revendication 1, **caractérisé en ce que** l'élément de commande utilisé est un élément structural dépendant de la température à chauffer par mise sous tension d'une source de courant électrique.

3. Arrangement selon la revendication 1, **caractérisé en ce que** l'élément de commande utilisé est un moteur électrique.
